# EUROPEAN PATENT APPLICATION

(11) **EP 3 669 649 A1**
(43) Date of publication of application: **24.06.2020**
(21) Application number: 18213514.5
(22) Date of filing: 18.12.2018
(51) Int. Cl.: A01M 7/00

(54) **A SPRAY VEHICLE**

(71) Applicant: Bayer AG, 51373 Leverkusen (DE)
(72) Inventor: Chapple, Andrew Charles, 40764 Langenfeld (DE)
(74) Representative: BIP Patents

(57) **Abstract**

The present invention relates to a spray vehicle (10), comprising at least one boom (20), a plurality of spray units (30), a plurality of sensors (60), a processing unit (70), and an output unit (80). The plurality of spray units are attached to the at least one boom. The plurality of spray units are configured to spray a liquid chemical. At least one sensor (61) of the plurality of sensors is configured to measure a speed of the vehicle relative to the ground. At least one sensor (62) of the plurality of sensors is configured to measure an air movement direction relative to the vehicle. At least one sensor (63) of the plurality of sensors is configured to measure an air movement speed relative to the vehicle. The processing unit is configured to determine an air movement direction relative to the ground and determine an air movement speed relative to the ground, the determination comprising utilisation of the speed of the vehicle, the air movement direction relative to the vehicle and the air movement speed relative to the vehicle. The processing unit is configured to generate a spray record for an environment within which the vehicle is operating, the spray record comprising: information over a time period of at least one spray condition relating to one or more of the plurality of spray units for the vehicle operating within the environment over the time period; the determined air movement direction relative to the ground over the time period; and the determined air movement speed relative to the ground over the time period. The output unit is configured to output the spray record.

## Description

### FIELD OF THE INVENTION

The present invention relates to a spray vehicle.

### BACKGROUND OF THE INVENTION

Spray drift caused by wind and wind gusts is a major problem in agricultural production. The spray droplets drift onto non target surfaces, such as within sensitive zones, on bystanders, onto water bodies, and onto neighbouring fields. Spraying can only occur in certain relatively benign conditions, when the wind speed is low and because farmers cannot prove that they were operating responsibly.

There is a need to address this problem

### SUMMARY OF THE INVENTION

It would be advantageous to have a way of mitigating and accounting for the effects of spray drift.

The object of the present invention is solved with the subject matter of the independent claims, wherein further embodiments are incorporated in the dependent claims.

In an aspect, there is provided a spray vehicle, comprising:
- at least one boom;
- a plurality of spray units;
- a plurality of sensors;
- a processing unit; and
- an output unit.

The plurality of spray units are attached to the at least one boom. The plurality of spray units are configured to spray a liquid chemical. At least one sensor of the plurality of sensors is configured to measure a speed of the vehicle relative to the ground. At least one sensor of the plurality of sensors is configured to measure an air movement direction relative to the vehicle. At least one sensor of the plurality of sensors is configured to measure an air movement speed relative to the vehicle. The processing unit is configured to determine an air movement direction relative to the ground and determine an air movement speed relative to the ground. The determination comprises utilisation of the speed of the vehicle, the air movement direction relative to the vehicle and the air movement speed relative to the vehicle. The processing unit is configured to generate a spray record for an environment within which the vehicle is operating. The spray record comprises: information over a time period of at least one spray condition relating to one or more of the plurality of spray units for the vehicle operating within the environment over the time period; the determined air movement direction relative to the ground over the time period; and the determined air movement speed relative to the ground over the time period. The output unit is configured to output the spray record.

In this manner, an audit record of spraying is recorded that records how a spray vehicle was operating and the environmental conditions that leads to drift, wind direction and speed is recorded, and this information is recording taking into account wherein within an environment (such as a field) spraying occurred.

Thus, by being able to provide accurate audit information relating to how spraying has progressed, the farmer can spray over an increased range of environmental conditions.

In an example, at least one sensor of the plurality of sensors is configured to determine a geographical location of the vehicle, and wherein the spray record comprises the geographical location of the vehicle over the time period.

In an example, the vehicle comprises an input unit. The input unit is configured to receive spray requirement information for the environment. The spray requirement information comprises at least one spray requirement condition relating to one or more of the plurality of spray units as a function of air movement speed and air movement direction and geographical location in the environment. The spray record comprises the at least one spray condition relating to the one or more of the plurality of spray units as a function of geographical location over the time period and the at least one spray requirement condition relating to the one or more of the plurality of spray units as a function of geographical location over the time period.

Thus, information such as a spray map is provided that indicates how one needs to spray, and that takes into account the weather conditions. Thus, for example at a field border when the wind is blowing into the field, spraying can be conducted in a normal manner. However, if the wind was to move into a direction towards the boundary mitigating action is required, such as spraying in a manner to minimise drift. Furthermore, if the wind speed increased in the direction of the boundary then further mitigating action can be required, and indeed ultimately if the position of spraying and the wind speed direction and speed are such that unwanted drift would be expected to occur, a requirement can be that spraying does not happen. In this way, not only is an audit record of how spraying occurred recorded, but this can be compared against that required. Also, the spray requirements can be used o control how spraying is actually carried out.

In this manner, not only can accurate audit information be recorded relating to what was done compared against what should have been done to mitigate drift, but the spray vehicle can operate at operational levels that have been found to mitigate drift, and as such the spraying envelope with respect to weather conditions within which spraying can be carried out can be broadened.

In an example, the vehicle comprises at least one first actuator. The at least one boom is movably attached to the vehicle, and the at least one first actuator is configured to move the at least one boom in a vertical direction. The processing unit is configured to control the at least one first actuator to move the at least one boom in a vertical direction. At least one sensor of the plurality of sensors is configured to provide data from which a height of the at least boom above the ground can be determined. The at least one spray condition relating to the one or more of the plurality of spray units comprises the height of the at least one boom above the ground over the time period.

In this manner, it can be established that the farmer for example was correctly trying to spray in a manner to mitigate drift, but that there could have been a mechanical failure in the boom that meant it did not respond as required. Therefore, a further level of audit accountability is provided.

In an example, the at least one spray requirement condition relating to the one or more of the plurality of spray units comprises a required height of the at least one boom above the ground as a function of air movement speed and air movement direction and geographical location in the environment.

In an example, the processing unit is configured to control the at least one first actuator to position the at least one boom at a height above the ground that depends on a magnitude of the determined air movement speed relative to the ground. The least one spray condition relating to the one or more of the plurality of spray units comprises the values of the control signals provided to the at least one first actuator over the time period.

In an example, the plurality of spray units are movably attached to the at least one boom. At least one sensor of the plurality of sensors is configured to provide data from which at least one angle of the one or more of the plurality of spray units with respect to a vertical axis can be determined. The least one spray condition relating to the one or more of the plurality of spray units comprises the at least one angle of the one or more of the plurality of spray units with respect to the vertical axis over the time period.

In an example, the at least one spray requirement condition relating to the one or more of the plurality of spray units comprises a required angle of the one or more of the plurality of spray units as a function of air movement speed and air movement direction and geographical location in the environment.

In an example, the vehicle comprises at least one first rotator actuator configured to rotate the one or more of the plurality of spray units by at least one angle of rotation with respect to the vertical axis. The processing unit is configured to control one or more of the at least one first rotator actuator to rotate the one or more of the plurality of spray units. The least one spray condition relating to the one or more of the plurality of spray units comprises the values of the control signals provided to the at least one first rotator actuator over the time period.

In this manner, it can be established that the farmer for example was correctly trying to spray in a manner to mitigate drift, but that there could have been a mechanical failure in the spray units that meant that did not respond as required. Therefore, a further level of audit accountability is provided.

In an example, the plurality of spray units are configured to start and stop spraying the liquid chemical. The least one spray condition relating to the one or more of the plurality of spray units comprises when the one or more of the plurality of spray units were controlled to be spraying and when the one or more of the plurality of spray units were controlled not to be spraying over the time period.

In an example, the at least one spray requirement condition relating to the one or more of the plurality of spray units comprises geographical locations in the environment when the one or more of the plurality of spray units are required not to spray as a function of air movement speed and air movement direction.

In an example, the vehicle comprises at least one activation actuator configured to start the one or more of the plurality of spray units spraying the liquid chemical and configured to stop the one or more of the plurality of spray units spraying the liquid chemical. The least one spray condition relating to the one or more of the plurality of spray units comprises the values of the control signals provided to the at least one activation actuator over the time period.

In this manner, it can be established that the farmer for example was correctly trying to spray in a manner to mitigate drift, but that there could have been a mechanical failure in the spray units that meant that did not respond as required. Therefore, a further level of audit accountability is provided.

In an example, the plurality of spray units are configured to spray the liquid having a specific droplet size. The at least one spray condition relating to the one or more of the plurality of spray units comprises the droplet size sprayed by the one or more of the plurality of spray units with respect to the vertical axis over the time period.

In an example, the vehicle comprises at least one spray adjustment actuator configured to control a droplet size of the liquid chemical sprayed by one or more of the plurality of spray units. The least one spray condition relating to the one or more of the plurality of spray units comprises the values of the control signals provided to the at least one adjustment actuator over the time period.

In this manner, it can be established that the farmer for example was correctly trying to spray in a manner to mitigate drift, but that there could have been a mechanical failure in the spray units that meant that did not respond as required. Therefore, a further level of audit accountability is provided.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a spray vehicle;
Fig. 2 shows a schematic example of a plan view of a spray vehicle;
Fig. 3 shows a schematic set up of an example of a spray units attached to a boom;
Fig. 4 shows a schematic set up of an example of a spray units attached to a boom; and
Fig- 5 shows a schematic example of a plan view of a spray vehicle within an environment.

### DETAILED DESCRIPTION OF EMBODIMENTS

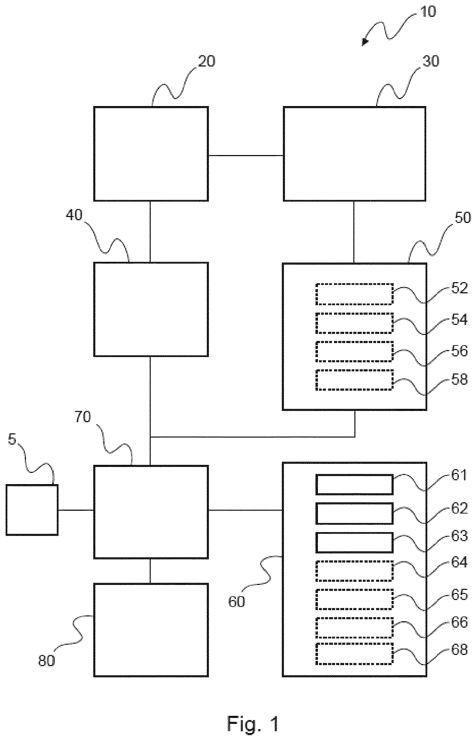

Fig. 1 shows an example of a spray vehicle 10, where essential features are represented in solid lines and optional features are represented in dashed lines. The spray vehicle comprises at least one boom 20, a plurality of spray units 30, a plurality of sensors 60, a processing unit 70, and an output unit 80. The plurality of spray units are attached to the at least one boom. The plurality of spray units are configured to spray a liquid chemical. At least one sensor 61 of the plurality of sensors is configured to measure a speed of the vehicle relative to the ground. At least one sensor 62 of the plurality of sensors is configured to measure an air movement direction relative to the vehicle. At least one sensor 63 of the plurality of sensors is configured to measure an air movement speed relative to the vehicle. The processing unit is configured to determine an air movement direction relative to the ground and determine an air movement speed relative to the ground. The determination of the direction and speed comprises utilisation of the speed of the vehicle, and comprises utilisation of the air movement direction relative to the vehicle and comprises utilisation of the air movement speed relative to the vehicle. The processing unit is configured also to generate a spray record for an environment within which the vehicle is operating. The spray record comprises information over a time period of at least one spray condition relating to one or more of the plurality of spray units for the vehicle operating within the environment over the time period. The spray record also comprises the determined air movement direction relative to the ground over the time period. The spray record also comprises the determined air movement speed relative to the ground over the time period. The output unit is configured to output the spray record.

According to an example, at least one sensor 68 of the plurality of sensors is configured to determine a geographical location of the vehicle, and the spray record can then comprise the geographical location of the vehicle over the time period.

In an example, the at least one sensor comprises a GPS sensor based system.

According to an example, the vehicle comprises an input unit 5. The input unit is configured to receive spray requirement information for the environment. This can be via wired or wireless communication. The input unit is communicatively coupled to the processing unit, and the input unit can provide the processing unit with the spray requirement information. The spray requirement information comprises at least one spray requirement condition relating to one or more of the plurality of spray units as a function of air movement speed and air movement direction and geographical location in the environment. The spray record can then comprise the at least one spray condition relating to the one or more of the plurality of spray units as a function of geographical location over the time period and the at least one spray requirement condition relating to the one or more of the plurality of spray units as a function of geographical location over the time period.

According to an example, the vehicle comprises at least one first actuator 40. The at least one boom is movably attached to the vehicle, and the at least one first actuator is configured to move the at least one boom in a vertical direction. The processing unit is configured to control the at least one first actuator to move the at least one boom in a vertical direction. At least one sensor 64 of the plurality of sensors is configured to provide data from which a height of the at least boom above the ground can be determined. The least one spray condition relating to the one or more of the plurality of spray units can then comprise the height of the at least one boom above the ground over the time period. Thus the height of a boom as it changes with time can be recorded and output.

According to an example, the at least one spray requirement condition relating to the one or more of the plurality of spray units comprises a required height of the at least one boom above the ground as a function of air movement speed and air movement direction and geographical location in the environment.

According to an example, the processing unit is configured to control the at least one first actuator to position the at least one boom at a height above the ground that depends on a magnitude of the determined air movement speed relative to the ground. The at least one spray condition relating to the one or more of the plurality of spray units can then comprise the values of the control signals provided to the at least one first actuator over the time period.

According to an example, the plurality of spray units are movably attached to the at least one boom. At least one sensor 65 of the plurality of sensors is configured to provide data from which at least one angle of the one or more of the plurality of spray units with respect to a vertical axis can be determined. The least one spray condition relating to the one or more of the plurality of spray units can then comprise the at least one angle of the one or more of the plurality of spray units with respect to the vertical axis over the time period.

According to an example, the at least one spray requirement condition relating to the one or more of the plurality of spray units comprises a required angle of the one or more of the plurality of spray units as a function of air movement speed and air movement direction and geographical location in the environment.

According to an example, the vehicle comprises at least one first rotator actuator 52 configured to rotate the one or more of the plurality of spray units by at least one angle of rotation with respect to the vertical axis. Tthe processing unit is configured to control one or more of the at least one first rotator actuator to rotate the one or more of the plurality of spray units. The least one spray condition relating to the one or more of the plurality of spray units can then comprise the values of the control signals provided to the at least one first rotator actuator over the time period.

According to an example, the plurality of spray units are configured to start and stop spraying the liquid chemical. The least one spray condition relating to the one or more of the plurality of spray units can comprise when the one or more of the plurality of spray units were controlled to be spraying and when the one or more of the plurality of spray units were controlled not to be spraying over the time period. The at least one spray condition relating to the one or more of the plurality of spray units can comprise where the one or more of the plurality of spray units were controlled to be spraying and where the one or more of the plurality of spray units were controlled not to be spraying over the time period

According to an example, the at least one spray requirement condition relating to the one or more of the plurality of spray units comprises geographical locations in the environment when the one or more of the plurality of spray units are required not to spray as a function of air movement speed and air movement direction.

According to an example, the vehicle comprises at least one activation actuator 56 configured to start the one or more of the plurality of spray units spraying the liquid chemical and configured to stop the one or more of the plurality of spray units spraying the liquid chemical. The least one spray condition relating to the one or more of the plurality of spray units can comprise the values of the control signals provided to the at least one activation actuator over the time period.

According to an example, the plurality of spray units are configured to spray the liquid having a specific droplet size. The at least one spray condition relating to the one or more of the plurality of spray units can then comprise the droplet size sprayed by the one or more of the plurality of spray units with respect to the vertical axis over the time period. A specific droplet size relates to a droplet size distribution centred around, or having a mean, droplet size.

According to an example, the vehicle comprises at least one spray adjustment actuator 58 configured to control a droplet size of the liquid chemical sprayed by one or more of the plurality of spray units. The least one spray condition relating to the one or more of the plurality of spray units can then comprises the values of the control signals provided to the at least one adjustment actuator over the time period.

Thus, as shown in Fig. 1 in an example, the spray vehicle comprises at least one boom 20, a plurality of spray units 30, at least one first actuator 40, at least one second actuator 50, a plurality of sensors 60, and a processing unit 70. The at least one boom is movably attached to the vehicle. The plurality of spray units are attached to the at least one boom. The plurality of spray units are configured to spray a liquid chemical. The at least one first actuator is configured to move the at least one boom. The at least one second actuator is configured to control the plurality of spray units. At least one sensor 61 of the plurality of sensors is configured to measure a speed of the vehicle relative to the ground. At least one sensor 62 of the plurality of sensors is configured to measure an air movement direction relative to the vehicle. At least one sensor 63 of the plurality of sensors is configured to measure an air movement speed relative to the vehicle. The processing unit is configured to determine an air movement direction relative to the ground and determine an air movement speed relative to the ground. The determination of the air movement direction relative to the ground and the air movement speed relative to the ground comprises utilisation of the speed of the vehicle, the air movement direction relative to the vehicle and the air movement speed relative to the vehicle. The processing unit is configured also to control the at least one first actuator and/or the at least one second actuator. The control of the at least one first actuator and/or of the at least one second actuator comprises utilisation of the determined air movement direction relative to the ground and the determined air movement speed relative to the ground.

In this manner, the effect of drift of a sprayed liquid caused by wind can be mitigated through movement of a spray boom and/or control of spray units themselves, with this mitigation taking into account the real wind speed and direction. Thus, a vehicle can spray closer to the edge of fields and/or closer to footpaths, or areas that are not to be sprayed, and/or spraying can be conducted at higher vehicle speeds and at higher wind speeds than currently achievable.

In an example, the at least one sensor 61 configured to measure a speed of the vehicle relative to the ground comprises a GPS system.

In an example, the at least one sensor 61 configured to measure a speed of the vehicle relative to the ground comprises a laser reflectance based system.

In an example, the at least one sensor 61 configured to measure a speed of the vehicle relative to the ground comprises a system linked to the transmission of the vehicle.

In an example, the at least one sensor 62 configured to measure an air movement direction relative to the vehicle comprises a wind vane.

In an example, the at least one sensor 63 configured to measure an air movement speed relative to the vehicle comprises an anemometer.

In an example, the at least one first actuator is configured to move the at least one boom in a vertical direction, and the processing unit is configured to control the at least one first actuator to move the at least one boom in a vertical direction.

Thus, in this way as the wind speed and/or direction would lead to more spray drift, for example in a lateral direction perpendicular to a movement direction of the spray vehicle, the boom can be lower if spray drift is expected to increase, as a consequence of the wind speed increasing and/or the wind direction moving in a direction more perpendicular to the vehicle movement direction.

In an example, at least one sensor 64 of the plurality of sensors is configured to provide data from which a height of the at least boom above the ground can be determined. The processing unit is configured to control the at least one first actuator to position the at least one boom at a height above the ground that depends on a magnitude of the determined air movement speed relative to the ground.

In this manner, even if the ground either side of the spray vehicle is no flat, but is higher of lower than a nominal ground level, the spray booms can be positioned at the ideal position to mitigate spray drift, taking into account wind speed.

In an example, the sensor used to determine height is a radar sensor.

In an example, the sensor used to determine height is a laser time of flight sensor.

In an example, the sensor used to determine height is a sensor that determines the position of the boom with respect to an end stop, and assuming that the ground is flat calculates the height above the ground from the position of the boom with respect to the vehicle.

In an example, the processing unit is configured to control the at least one first actuator to position the at least one boom at a height above the ground that depends on a magnitude of an air direction angle of the determined air movement direction relative to the ground.

In this manner, even if the ground either side of the spray vehicle is no flat, but is higher of lower than a nominal ground level, the spray booms can be positioned at the ideal position to mitigate spray drift, taking into account wind speed and direction.

In an example, the air direction angle is the angle between the determined air movement direction relative to the ground and a projection of the fore-aft axis of the vehicle onto the ground.

In an example, the height above the ground at which the at least one boom is positioned is calculated on the basis of the air movement speed relative to the ground multiplied by the cosine of the air direction angle.

In other words, the effect of cross-winds or a component of wind that is perpendicular to the forward movement direction of the vehicle of spray drift can be mitigated through appropriate control of the height of a spray boom and/or control of the spray units themselves.

In an example, the processing unit is configured to control the at least one first actuator to move the at least one boom in a downwards direction when the magnitude of the determined air movement speed relative to the ground exceeds one or more threshold values.

In this manner, spraying can continue in a set manner until a wind speed exceeds a set magnitude, and then remedial action can be undertaken for this situation when spray drift can become problematic. This saves energy, saves wear on components as the boom is only moved when necessary and also mitigates the possibility of hunting, where the system could be continuously seeking an optimum setting.

In an example, the one or more threshold values depend upon a magnitude of an air direction angle. The air direction angle is the angle between the determined air movement direction relative to the ground and a projection of the fore-aft axis of the vehicle onto the ground.

In an example, the one or more threshold values are a plurality of threshold values. A threshold value of the plurality of threshold values is calculated on the basis of a set air movement speed multiplied by the cosine of the air direction angle.

In an example, the plurality of spray units are movably attached to the at least one boom and at least one sensor 65 of the plurality of sensors is configured to provide data from which an angle of the plurality of spray units with respect to a vertical axis can be determined. The at least one second actuator 50 comprises at least one first rotator actuator 52 configured to rotate the plurality of spray units by at least one angle of rotation with respect to the vertical axis. The processing unit is configured to control one or more of the at least one first rotator actuator to rotate one or more of the plurality of spray units.

In this way, the spray units can be angles to spray slightly upwind in order to mitigate wind speed and direction that could otherwise cause spray drift.

In an example, a horizontal axis extends in a direction perpendicular to a fore-aft axis of the vehicle and extends in a direction perpendicular to the vertical axis. At least one sensor 66 of the plurality of sensors is configured to provide data from which an angle of the plurality of spray units with respect to the horizontal axis can be determined. The at least one second actuator 50 comprises at least one second rotator actuator 54 configured to rotate the plurality of spray units by at least one angle of rotation with respect to the horizontal axis. The processing unit is configured to control one or more of the at least one second rotator actuator to rotate one or more of the plurality of spray units.

In an example, the processing unit is configured to control a plurality of first rotator actuators to hold an equivalent number of spray units simultaneously at different angles of rotation with respect to the vertical axis.

In an example, control of the plurality of first rotator actuators depends upon the locations of the equivalent number of spray units on the at least one boom.

Thus, spray units on the outer edge of the boom that could be nearer an edge of the field can be angled further upwind to mitigate spray drift, whilst the spray units on the other end of the boom or on the other end of a boom on the other side of the vehicle do not need to be angled to the same extent, because there is less chance of the spray from that spray unit crossing the field boundary.

In an example, the processing unit is configured to control a plurality of second rotator actuators to hold an equivalent number of spray units simultaneously at different angles of rotation with respect to the horizontal axis.

In an example, control of the plurality of second rotator actuators depends upon the locations of the equivalent number of spray units on the at least one boom.

In an example, the processing unit is configured to control the at least one first rotator actuator and/or the at least one second rotator actuator to rotate the plurality of spray units in unison by a same angle of rotation with respect to the vertical axis and/or horizontal axis.

In an example, control of the at least one second actuator by the processing unit comprises utilisation of a magnitude of the determined air movement speed relative to the ground.

In an example, control of the at least one second actuator by the processing unit comprises utilisation of a magnitude of an air direction angle of the determined air movement direction relative to the ground.

In an example, the air direction angle is the angle between the determined air movement direction relative to the ground and a projection of the fore-aft axis of the vehicle onto the ground.

In an example, the at least one angle of rotation with respect to the vertical axis is based at least in part on the air movement speed relative to the ground multiplied by the cosine of the air direction angle.

In an example, the at least one second actuator comprises at least one activation actuator 56 configured to start the plurality of spray units spraying the liquid chemical and configured to stop the plurality of spray units spraying the liquid chemical.

In an example, the processing unit is configured to control one or more of the at least one activation actuator to stop an equivalent number of spray units from spraying the liquid chemical based at least in part on a magnitude of the determined air movement speed relative to the ground.

In this manner, when the wind speed in combination with its direction would lead to a situation where spray from one or more spray units could cause problematic spray drift, those units can be turned off. Thus, for example a spray vehicle can operate on the margins of a field and gusting wind that would cause spray from an outer one or two spray units to cross over the border of the field can be mitigated by turning off those spray units.

In an example, the processing unit is configured to control one or more of the at least one activation actuator to stop an equivalent number of spray units from spraying the liquid chemical based at least in part on a magnitude of an air direction angle of the determined air movement direction relative to the ground.

In an example, the air direction angle is the angle between the determined air movement direction relative to the ground and a projection of the fore-aft axis of the vehicle onto the ground

In an example, the determination to stop a spray unit from spraying is based at least in part on the air movement speed relative to the ground multiplied by the cosine of the air direction angle.

In an example, the at least one second actuator comprises at least one spray adjustment actuator 58 configured to control a droplet size of the liquid chemical sprayed by the plurality of spray units.

In an example, the processing unit is configured to control one or more of the at least one spray adjustment actuator to control the droplet size of the liquid chemical sprayed by an equivalent number of spray units based at least in part on a magnitude of the determined air movement speed relative to the ground.

In an example, the processing unit is configured to increase the droplet size on the basis of an increase in the magnitude of the determined air movement speed relative to the ground.

In this manner, as the wind speed and/or direction would otherwise lead to problematic spray drift, the sprayed drop size can be increased in order to mitigate spray drift, because larger spray droplets suffer from less drift in comparison to smaller spray droplets. The processing unit does through control of the spray adjustment actuator.

In an example, the processing unit is configured to control one or more of the at least one spray adjustment actuator to control the droplet size of the liquid chemical sprayed by an equivalent number of spray units based at least in part on a magnitude of an air direction angle of the determined air movement direction relative to the ground.

In an example, the air direction angle is the angle between the determined air movement direction relative to the ground and a projection of the fore-aft axis of the vehicle onto the ground

In an example, the droplet size is determined at least in part on the air movement speed relative to the ground multiplied by the cosine of the air direction angle.

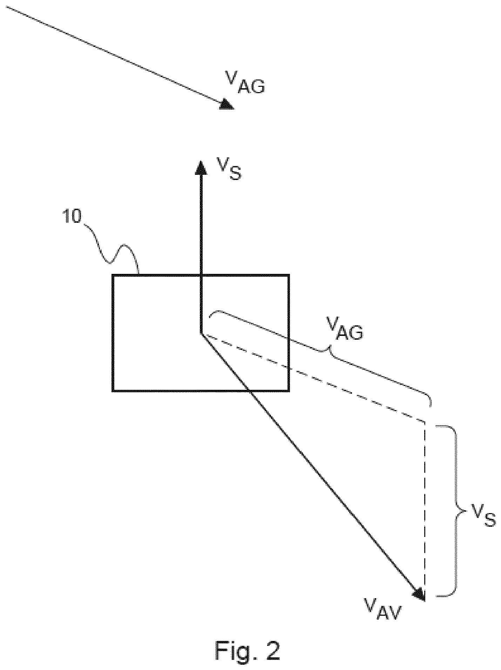

Fig. 2 shows a plan view of an exemplar vehicle 10 moving and spraying in a field. For simplicity of representation the spray booms extending either side of the vehicle are not shown. The vehicle is moving with a speed V_{S} and the wind is blowing in a particular direction and with a velocity V_{AG}. The vehicle has an anemometer and a wind vane to determine both the direction and speed of the wind, with respect to the vehicle - in other words as if the vehicle was stationary. Due to the movement of the vehicle, the measured wind direction and wind speed have both been distorted from their true ground based values, as shown. A vector based analysis can however be used to determine the real ground based wind direction and wind speed. Then, the processing unit of the vehicle can move the spray booms downwards if the wind is too strong and its direction would lead to lateral drift, and/or the processing unit can control the spray units themselves, to spray larger drops that are less susceptible to drift or angle the spray units into the wind. The required positioning of the boom as a function of wind speed, wind direction and position of the vehicle in the field has already been downloaded to the vehicle, and whilst spraying the vehicle records the conditions under which the spray has been applied. Thus, in this way spray can be applied correctly in conditions that accounts for the specific weather conditions and where spray is being applied, and at the same time a detailed audit record is provided.

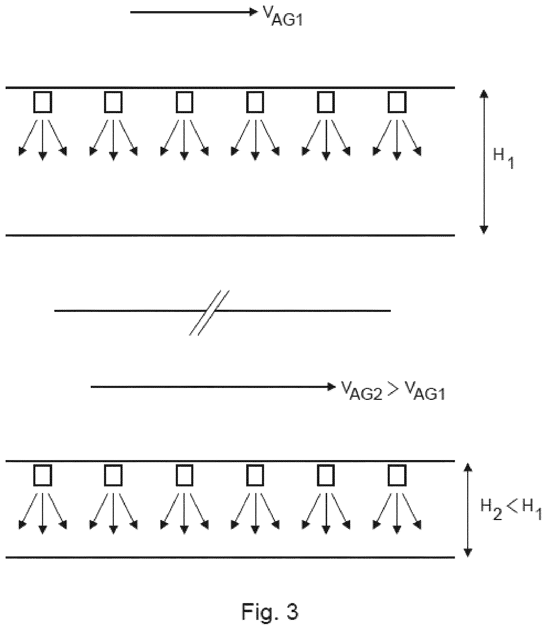

Fig. 3 schematically represents one of these situations. In the top image, the wind speed that is now in terms of a component blowing perpendicular to the vehicle's forward direction is V_{AG1}, and the processing unit has controlled appropriate actuators or actuator to hold the spray boom at a distance above ground equal to H₁, where spraying is optimized and at the same time the effects of drift are determined not to be problematic. The wind is however gusting in terms of a wind speed varying and/or a wind direction changing, and now the component of the wind speed perpendicular to the forward direction has increased to a value V_{AG2}. In this example, the processing unit mitigates the effect of drift, that would otherwise occur, by lowering the spray boom to a height H₂, where it has been determined that there will be less drift. This is due to the spray droplets having less distance to travel before reaching the target to be sprayed and there is less drift.

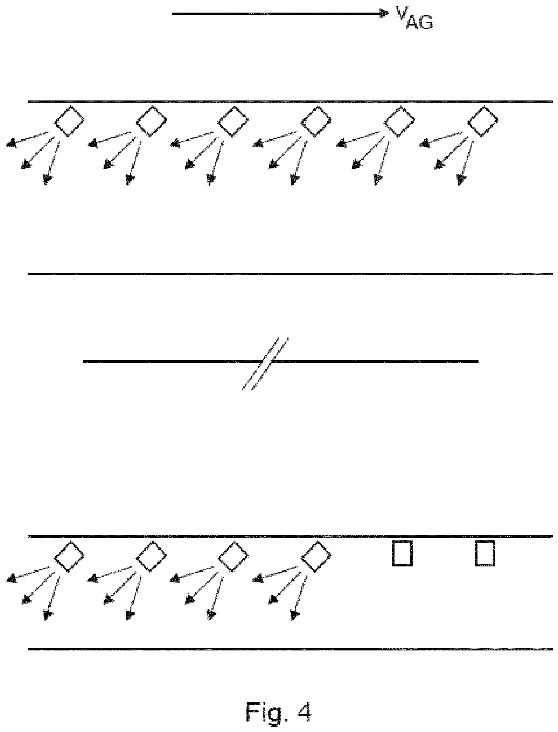

Fig. 4 schematically represents another one of these situations. In the top image, the wind speed that in terms of a component blowing perpendicular to the vehicle's forward direction is V_{AG}, and the processing unit has controlled appropriate actuators or actuator to hold the spray units at an angle into the wind. The spray then performs an arc moving upwind and then being blown downwind, with the overall sideways drift being less than would have occurred if the spray units had just sprayed downwards. In the bottom image, the vehicle is spraying on the border of a filed, and the wind cross wind component is again as shown in the top image. Representative spray units are shown, with the left most spray unit shown, some inboard of that unit and the two right most spray units closest to the field boundary are shown. The processing unit has determined that there is no issue relating to spray drift from the left most spray unit, which consequently has been controlled to spray downwards. Moving inboard, the processing unit has controlled appropriate actuators such that different spray units are gradually angled by increasing angles to spray more into the wind. A number of spray units are shown angled by the same amount, but each can be angled by a different amount. Additionally, the processing unit has determined that due to the specific magnitude of the cross wind speed at this time there is a risk of spray from the two spray units on the right hand end of the boom crossing over the field boundary and the processing unit has controlled actuators to turn these spray units off.

It is to be noted, that the situations represented in Figs. 3-4 can occur simultaneously, in that the boom can be raised or lowered as required and at the same time spray units angles into the wind and if necessary turned off. Also, actuators can be used to change the droplet size, thereby the processing unit can increase the drop size of the spray to mitigate drift as the wind speed increases and/or the wind direction changes to a direction where drift could become problematic.

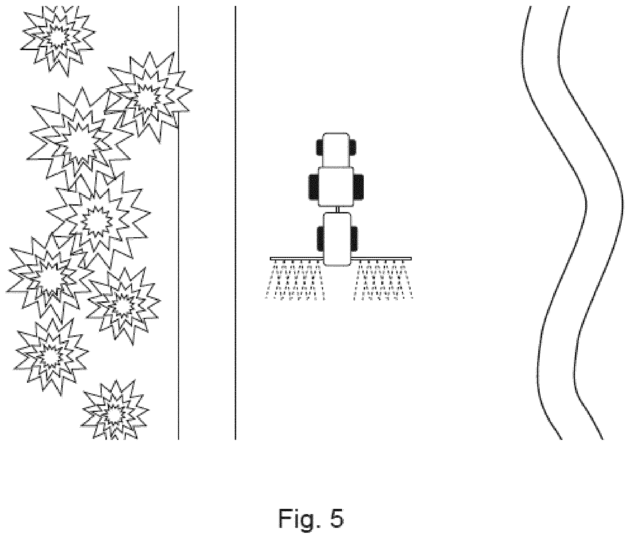

Fig. 5 then represents schematically a vehicle spraying in a field. There is a stream on the right hand side of the field, and it is important that spray does not land on the water or land close enough to the stream to leach into the water. There is also a footpath extending through the centre of the field, and again it is required that spray does not fall over the footpath. On another side of the field, there are a number of rare and protected trees, and again spray and it is important that spray does not land on these trees. However, in the manner described above the farmer can spray around the field, and the processing unit based on information provided to automatically adjusts how the spray is applied to account for the wind speed and direction, and at the same time an audit record of how that spray is applied is acquired.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A spray vehicle (10), comprising:
- at least one boom (20);
- a plurality of spray units (30);
- a plurality of sensors (60);
- a processing unit (70); and
- an output unit (80);
wherein, the plurality of spray units are attached to the at least one boom;
wherein, the plurality of spray units are configured to spray a liquid chemical;
wherein, at least one sensor (61) of the plurality of sensors is configured to measure a speed of the vehicle relative to the ground;
wherein, at least one sensor (62) of the plurality of sensors is configured to measure an air movement direction relative to the vehicle;
wherein, at least one sensor (63) of the plurality of sensors is configured to measure an air movement speed relative to the vehicle;
wherein, the processing unit is configured to determine an air movement direction relative to the ground and determine an air movement speed relative to the ground, the determination comprising utilisation of the speed of the vehicle, the air movement direction relative to the vehicle and the air movement speed relative to the vehicle;
wherein, the processing unit is configured to generate a spray record for an environment within which the vehicle is operating, the spray record comprising: information over a time period of at least one spray condition relating to one or more of the plurality of spray units for the vehicle operating within the environment over the time period; the determined air movement direction relative to the ground over the time period; and the determined air movement speed relative to the ground over the time period; and
wherein, the output unit is configured to output the spray record.

2. Spray vehicle according to claim 1, wherein at least one sensor (68) of the plurality of sensors is configured to determine a geographical location of the vehicle, and wherein the spray record comprises the geographical location of the vehicle over the time period.

3. Spray vehicle according to claim 2, wherein the vehicle comprises an input unit (5), wherein the input unit is configured to receive spray requirement information for the environment, wherein the spray requirement information comprises at least one spray requirement condition relating to one or more of the plurality of spray units as a function of air movement speed and air movement direction and geographical location in the environment, and wherein the spray record comprises the at least one spray condition relating to the one or more of the plurality of spray units as a function of geographical location over the time period and the at least one spray requirement condition relating to the one or more of the plurality of spray units as a function of geographical location over the time period.

4. Spray vehicle according to any of claims 1-3, wherein the vehicle comprises at least one first actuator (40), wherein the at least one boom is movably attached to the vehicle, wherein the at least one first actuator is configured to move the at least one boom in a vertical direction, wherein the processing unit is configured to control the at least one first actuator to move the at least one boom in a vertical direction, wherein at least one sensor (64) of the plurality of sensors is configured to provide data from which a height of the at least boom above the ground can be determined, and wherein the least one spray condition relating to the one or more of the plurality of spray units comprises the height of the at least one boom above the ground over the time period.

5. Spray vehicle according to claim 4, wherein the at least one spray requirement condition relating to the one or more of the plurality of spray units comprises a required height of the at least one boom above the ground as a function of air movement speed and air movement direction and geographical location in the environment.

6. Spray vehicle according to any of claims 4-5, wherein the processing unit is configured to control the at least one first actuator to position the at least one boom at a height above the ground that depends on a magnitude of the determined air movement speed relative to the ground, and wherein the least one spray condition relating to the one or more of the plurality of spray units comprises the values of the control signals provided to the at least one first actuator over the time period.

7. Spray vehicle according to any of claims 1-6, wherein the plurality of spray units are movably attached to the at least one boom, wherein at least one sensor (65) of the plurality of sensors is configured to provide data from which at least one angle of the one or more of the plurality of spray units with respect to a vertical axis can be determined, wherein the least one spray condition relating to the one or more of the plurality of spray units comprises the at least one angle of the one or more of the plurality of spray units with respect to the vertical axis over the time period.

8. Spray vehicle according to claim 7, wherein the at least one spray requirement condition relating to the one or more of the plurality of spray units comprises a required angle of the one or more of the plurality of spray units as a function of air movement speed and air movement direction and geographical location in the environment.

9. Spray vehicle according to any of claims 7-8, wherein the vehicle comprises at least one first rotator actuator (52) configured to rotate the one or more of the plurality of spray units by at least one angle of rotation with respect to the vertical axis, and wherein the processing unit is configured to control one or more of the at least one first rotator actuator to rotate the one or more of the plurality of spray units, and wherein the least one spray condition relating to the one or more of the plurality of spray units comprises the values of the control signals provided to the at least one first rotator actuator over the time period.

10. Spray vehicle according to any of claims 1-9, wherein the plurality of spray units are configured to start and stop spraying the liquid chemical, and wherein the least one spray condition relating to the one or more of the plurality of spray units comprises when the one or more of the plurality of spray units were controlled to be spraying and when the one or more of the plurality of spray units were controlled not to be spraying over the time period.

11. Spray vehicle according to claim 10, wherein the at least one spray requirement condition relating to the one or more of the plurality of spray units comprises geographical locations in the environment when the one or more of the plurality of spray units are required not to spray as a function of air movement speed and air movement direction.

12. Spray vehicle according to any of claims 10-11, wherein the vehicle comprises at least one activation actuator (56) configured to start the one or more of the plurality of spray units spraying the liquid chemical and configured to stop the one or more of the plurality of spray units spraying the liquid chemical, and wherein the least one spray condition relating to the one or more of the plurality of spray units comprises the values of the control signals provided to the at least one activation actuator over the time period.

13. Spray vehicle according to any of claims 1-12, wherein the plurality of spray units are configured to spray the liquid having a specific droplet size, wherein the at least one spray condition relating to the one or more of the plurality of spray units comprises the droplet size sprayed by the one or more of the plurality of spray units with respect to the vertical axis over the time period.

14. Spray vehicle according to claim 13, wherein the vehicle comprises at least one spray adjustment actuator (58) configured to control a droplet size of the liquid chemical sprayed by one or more of the plurality of spray units, and wherein the least one spray condition relating to the one or more of the plurality of spray units comprises the values of the control signals provided to the at least one adjustment actuator over the time period.
